# EUROPÄISCHE PATENTANMELDUNG

(11) **EP 2 631 609 A1**
(43) Veröffentlichungstag der Anmeldung: **28.08.2013**
(21) Anmeldenummer: 12007662.5
(22) Anmeldetag: 15.11.2012
(51) Int. Cl.: G01F 1/32, G02B 6/42, F16L 7/02, G01L 7/02, G01L 19/00, G02B 6/24, G02B 6/36

(54) **Vortex-Durchflussmessgerät und diesbezügliche Faserdurchführung**

(30) Priorität: 21.11.2011 DE 102011118921
(71) Anmelder: Krohne Messtechnik GmbH, 47058 Duisburg (DE)
(72) Erfinder: Lübbers, Wilhelm, 26904 Börger (DE)
(74) Vertreter: Gesthuysen Patent- und Rechtsanwälte

(57) **Zusammenfassung**

Beschrieben und dargestellt ist ein Vortex-Durchflussmessgerät mit einem von einem Medium zumindest teilweise durchströmbaren und durch eine Gerätewandung (1) definierten Mediumraum (2), wenigstens einem in dem Mediumraum (2) vorgesehenen Staukörper und wenigstens einem mit dem im Wirkbereich des Staukörpers vorgesehenen Druckaufnehmer, wobei die Auslenkung des Druckaufnehmers messtechnisch zur Detektion des Drucks in dem dem Druckaufnehmer benachbarten Medium herangezogen wird, wobei zur Erfassung der Auslenkung des Druckaufnehmers wenigstens eine optische Faser (3) auf und/oder in dem Druckaufnehmer angeordnet ist, und wobei die optische Faser (3) vom Mediumraum durch eine druckfeste Faserdurchführung (4) in der Gerätewandung (1) in einen mediumfreien Außenraum (5) geführt ist

Ein Vortex-Durchflussmessgerät mit einer Faserdurchführung, die keine besondere Herrichtung der optischen Faser erforderlich macht und leicht herstellbar ist, wird dadurch erzielt, dass die Faserdurchführung (4) einen Faserkanal (6) in der Gerätewandung (1), ein in den Faserkanal (6) hineinragendes erstes Dichtelement (7) mit einer Anlagefläche (8) für die optische Faser (3) und wenigstens ein zweites Dichtelement (9) mit einer Anlagefläche (10) für die optische Faser umfasst, wobei das zweite Dichtelement (9) in einer in der Gerätewandung (1) ausgebildeten Führung (11) gerührt ist und im Dichtzustand der Faserdurchführung (4) das zweite Dichtelement (9) durch ein Stellmittel (12) so mit seiner Anlagefläche (10) gegen die Anlagefläche (8) des ersten Dichtelements (7) gedrückt ist, dass die zwischen der Anlagefläche (8) des ersten Dichtelements (7) und der Anlagefläche (10) des zweiten Dichtelements (9) angeordnete optische Faser (3) von der Anlagefläche (8) des ersten Dichtelements (7) und/oder von der Anlagefläche (10) des zweiten Dichtelements (9) umschmiegt ist und so der Faserkanal (6) durch das erste Dichtelement (7), das zweite Dichtelement (8) und die zwischen dem ersten Dichtelement (7) und dem zweiten Dichtelement (8) geführte optische Faser (3) verschlossen ist.

## Beschreibung

Die Erfindung betrifft ein Vortex-Durchflussmessgerät mit einem von einem Medium zumindest teilweise durchströmbaren und durch eine Gerätewandung definierten Mediumraum, wenigstens einem in dem Mediumraum vorgesehenen Staukörper und wenigstens einem mit dem im Wirkbereich des Staukörpers vorgesehenen Druckaufnehmer, wobei die Auslenkung des Druckaufnehmers messtechnisch zur Detektion des Drucks in dem dem Druckaufnehmer benachbarten Medium herangezogen wird, wobei zur Erfassung der Auslenkung des Druckaufnehmers wenigstens eine optische Faser auf und/oder in dem Druckaufnehmer angeordnet ist, und wobei die optische Faser vom Mediumraum durch eine druckfeste Faserdurchfiihrung in der Gerätewandung in einen mediumfreien Außenraum geführt ist. Darüber hinaus betrifft die Erfindung auch eine solche Faserdurchführung an sich.

Vortex-Durchflussmessgeräte sind seit langem bekannt, wobei das Messprinzip auf der Tatsache beruht, dass sich in einem flüssigen oder gasförmigen Medium hinter einem Staukörper, der von dem Medium umströmt wird, eine Wirbelstraße ausbildet, die durch sich mit der Strömung fortbewegende, sich vom Staukörper abgelöste Wirbel gebildet ist. Die Frequenz, mit der sich Wirbel von dem Staukörper ablösen, ist von der Strömungsgeschwindigkeit abhängig, wobei dieser Zusammenhang unter gewissen Voraussetzungen nahezu linear ist. Jedenfalls stellt die Messung der Wirbelfrequenz ein geeignetes Mittel zur Bestimmung der Strömungsgeschwindigkeit des Mediums dar, weshalb indirekt - unter zusätzlicher Berücksichtigung von beispielsweise Druck und Temperatur - eine Bestimmung des Volumen- und Massedurchflusses durch die Wirbelfrequenzmessung möglich ist. Die in einer Wirbelstraße auftretenden Wirbel des Mediums führen zu lokalen Druckschwankungen, die von Druckaufnehmern detektiert werden können. Ein solcher Druckaufnehmer kann eine im Wesentlichen eben ausgestaltete Messmembran aufweisen und muss so in der Wirbelstraße angeordnet sein, dass die von dem Staukörper erzeugten Wirbel zumindest mittelbar an der Messmembran des Druckaufnehmers vorbeiziehen und damit detektierbar sind. Dazu kann der Druckaufnehmer stromabwärts hinter dem Staukörper vorgesehen sein, er kann aber auch in dem Staukörper selbst ausgebildet sein oder beispielsweise über dem Staukörper angeordnet sein, wenn der Druckaufnehmer zum Beispiel über Kanäle im Gehäuse des Durchflussmessgeräts die Druckschwankungen der Wirbelstraße mittelbar erfasst.

Aus dem Stand der Technik sind ganz unterschiedliche Methoden bekannt, um die Auslenkung des Druckaufnehmers zu erfassen, es werden häufig kapazitive oder induktive Effekte genutzt, teilweise wird auch mit Piezokeramiken gearbeitet. Auch ist aus dem Stand der Technik bekannt optische Fasern zur Erfassung der Bewegung des Druckaufnehmers einzusetzen, wobei hier beispielsweise Konstruktionen bekannt sind, bei denen die optische Faser praktisch senkrecht vor der Messmembran des Druckaufnehmers steht und stirnseitig die Membran mit Licht beaufschlagt, das von der Messmembran reflektiert und nachfolgend zur Bewegungsdetektion verwendet wird. Aus dem Stand der Technik sind ebenfalls solche Vortex-Durchflussmessgeräte bekannt, bei denen an dem Druckaufnehmer anliegend eine optische Faser angeordnet ist, wobei die optische Faser mit dem Druckaufnehmer ausgelenkt wird, wenn dieser einem Druck- bzw. Differenzdruck ausgesetzt wird, mit dem Ergebnis, dass die optische Faser gestreckt und/oder gestaucht wird, die optische Faser also eine Längenänderung erfährt. Eine solche Längenänderung ist bekanntlich mit hoher Präzision optisch auswertbar, beispielsweise durch an sich bekannte Verfahren, die auf der Interferenz elektromagnetischer Wellen beruhen. Mit diesen Verfahren ist es ohne weiteres möglich, Längenänderungen sicher zu detektieren, die im Bereich der Wellenlänge der verwendeten elektromagnetischen Wellen liegen.

Optische Fasern sind vergleichsweise empfindlich, insbesondere hinsichtlich Biege- und Knickbeanspruchung, so dass es eine besondere Herausforderung darstellt, eine geeignete Faserdurchfiihrung in der Gerätewandung zu schaffen, um die Faser von dem Mediumraum in den mediumfreien Außenraum zu führen. In dem Mediumraum können extreme Bedingungen herrschen hinsichtlich des Drucks (mehrere 100 bar), hinsichtlich der Temperatur (mehrere 100 °C) und auch hinsichtlich der chemischen Aggressivität des Mediums. Die Faserdurchführung muss demnach geeignet sein, diesen Bedingungen standzuhalten, so dass der mediumfreie Außenraum, in dem sich beispielsweise die Auswerteelektronik für das Signal der optischen Faser befindet, sicher abgeschottet ist gegen den Mediumraum.

Aus dem Stand der Technik ist bekannt, eine optische Faser vor Installation mit einem mechanisch stabilen Dichtelement zu verkleben oder zu verlöten, wobei im letzteren Fall metallisierte optische Fasern verwendet werden müssen (z. B. GB 2 089 065 oder auch US 3,825,320). Diese Vorgehensweise ist vergleichsweise aufwendig, da die optischen Fasern meist nicht von den Herstellern der Vortex-Durchflussmessgeräte selbst entsprechend hergerichtet werden, sondern mit einer geeigneten geklebten oder gelöteten Dichtung von Dritten bezogen werden müssen. Darüber hinaus sind mit solchen Dichtelementen versehene optische Fasern hinsichtlich ihrer Abmessungen nicht flexibel einsetzbar, da eine optische Faser meist schlaufenförmig in den Mediumraum eines Vortex-Durchflussmessgeräts ragt und insofern beide Enden der Faser mit einem Dichtelement versehen werden müssen, so dass sich für jede Gerätevariante ein bestimmter Abstand von Dichtelement zu Dichtelement auf der optischen Faser ergibt und konstruktive Änderungen hinsichtlich der Positionierung des Druckaufnehmers unter Beibehaltung des Dichtelementabstandes nicht möglich sind. Darüber hinaus ist auch der Einbau derartiger Faserdurchführungen mechanisch vergleichsweise aufwendig, der Druckaufnehmer kann nicht demontiert werden, ohne die Faserdurchführung aus der Gerätewandung zu entnehmen. Die fehlende Flexibilität in der Länge der so hergerichteten optischen Fasern führt häufig auch dazu, dass zusätzliche Spleißstellen im mediumfreien Raum entstehen.

Es ist daher Aufgabe der Erfindung, ein Vortex-Durchflussmessgerät mit einer Faserdurchführung für eine optische Faser und eine entsprechende Faserdurchfiihrung selbst anzugeben, wobei die Fascrdurchführung keine besondere Herrichtung der optischen Faser erforderlich macht und leicht herstellbar ist.

Die zuvor hergeleitete und dargestellt Aufgabe ist zunächst und im wesentlichen bei dem Vortex-Durchflussmessgerät und bei der Faserdurchführung, von denen die vorliegende Erfindung ausgeht, dadurch gelöst, dass die Faserdurchführung einen Faserkanal in der Gerätewandung, ein in den Faserkanal hineinragendes erstes Dichtelement mit einer Anlagefläche für die optische Faser und wenigstens ein zweites Dichtelement mit einer Anlagefläche für die optische Faser umfasst, wobei das zweite Dichtelement in einer in der Gerätewandung ausgebildeten Führung geführt ist und im Dichtzustand der Faserdurchführung das zweite Dichtelement durch ein Stellmittel so mit seiner Anlagefläche gegen die Anlagefläche des ersten Dichtelements gedrückt ist, dass die zwischen der Anlagefläche des ersten Dichtelements und der Anlagefläche des zweiten Dichtelements angeordnete optische Faser von der Anlagefläche des ersten Dichtelements und/oder von der Anlagefläche des zweiten Dichtelements umschmiegt ist und so der Faserkanal durch das erste Dichtelement, das zweite Dichtelement und die zwischen dem ersten Dichtelement und dem zweiten Dichtelement geführte optische Faser verschlossen ist.

Die erfindungsgemäße Faserdurchführung erfordert keine spezielle Herrichtung der optischen Faser, weder muss ein Dichtelement auf die optische Faser aufgeschoben werden, noch muss ein solches Dichtelement mit der Faser verbunden werden. Bei der erfindungsgemäßen Faserdurchführung wird die optische Faser quasi von dem ersten Dichtelement von einer ersten Seite her und von dem zweiten Dichtelement von einer zweiten Seite her umgriffen, wobei der durch das Stellmittel auf das zweite Dichtelement aufgebrachte Druck zumindest so groß sein muss, dass sich das erste Dichtelement und/oder das zweite Dichtelement so stark elastisch und/oder plastisch deformieren, dass die optische Faser dicht umgriffen wird und gleichzeitig auch die Anlagefläche des ersten Dichtelements und die Anlagefläche des zweiten Dichtelements dicht gegeneinander abschließen. Daraus ist ersichtlich, dass die Anlageflächen für die optische Faser des ersten Dichtelements und des zweiten Dichtelements nicht ausschließlich Anlageflächen für die optische Faser sind, sondern auch gegenseitige Anlageflächen füreinander sind. Alle Elemente, die zur Schließung des Faserkanals erforderlich sind, sind in der Faserdurchführung umfasst, abgesehen natürlich von der optischen Faser selbst.

Bei einer vorteilhaften Weiterbildung der Erfindung ist vorgesehen, dass auch das erste Dichtelement in einer in der Gerätewandung ausgebildeten Führung geführt ist und durch ein Stellmittel positionierbar ist. Diese Variante hat den Vorteil, dass der Faserkanal vollständig freigegeben werden kann, wenn beispielsweise im Rahmen der Montage die optische Faser durch den Faserkanal geführt wird. Darüber hinaus hat sie den Vorteil, dass die Lage der optischen Faser im Faserkanal eingestellt und an konstruktive Bedürfnisse angepasst werden kann.

Bei einer weiteren vorteilhaften Ausgestaltung der Erfindung ist vorgesehen, dass im Dichtzustand der Faserdurchführung das erste Dichtelement mit seiner Führung dicht abschließt und/oder das zweite Dichtelement mit seiner Führung dicht abschließt. Eine solche Dichtwirkung ist beispielsweise dann gegeben, wenn die Dichtelemente im Dichtzustand, also bei Druckbeaufschlagung mit dem Stellelement, entlang einer Umfangslinie mit ihrer Führung dicht abschließen. Üblicherweise werden die Anlageflächen der Dichtelemente für die optische Faser in etwa senkrecht zu der durch die jeweilige Führung der Dichtelemente definierte Linearbewegung erstreckt sein. Die Mantelfläche oder die Mantelflächen der Führung werden üblicherweise senkrecht zu der Anlagefläche der Dichtelemente orientiert sein. Bei einer solchen Ausgestaltung der Dichtelemente und dem Gegeneinanderpressen der Dichtelemente mit ihren Anlageflächen wird eine Stauchung der Dichtelemente in Richtung der Kraftbeaufschlagung bewirkt, was gleichzeitig zu einer Streckung der Dichtelemente in einer zur Kraftbeaufschlagung senkrechten Richtung führt, so dass sich die Wandung oder die Wandungen der Dichtelemente, die der Wandung oder den Wandungen der jeweiligen Führung gegenüberstehen dieser Wandung bzw. diesen Wandungen der Führung annähern und - geeignete Auslegung vorausgesetzt - einen hinreichend dichten Formschluss bewirken. Die Dichtelemente und die den Dichtelementen jeweils zugeordneten Führungen in dem Gehäuse sind so aufeinander abgestimmt, dass sie eine Passung mit nur sehr geringem Über- oder Untermaß bilden, so dass immer eine gute Beweglichkeit der Dichtelemente in den jeweiligen Führungen gewährleistet ist, gleichzeitig aber auch eine gute Dichtwirkung schon bei mäßiger Kraftbeaufschlagung erzielt wird.

Bei der Wahl des Materials für das erste Dichtelement und/oder das zweite Dichtelement sind verschiedene Randbedingungen zu berücksichtigen. Zum einen sollte das Material bei für die optische Faser unkritischen Anpressdrücken hinreichend deformierbar sein, um sich hinreichend um die optische Faser schmiegen zu können. Das Material muss gegenüber dem Medium im Mediumraum chemisch beständig sein, so dass die Dichtelemente nicht durch Korrosion gefährdet sind. Schließlich muss das Material der Dichtelemente auch hinreichend druck- und temperaturstabil sein. Es kommen Materalien mit überwiegend elastischen Eigenschaften in Betracht (z. B. Elastomere), aber auch Materialien mit plastischen oder elastoplastischen Eigenschaften wie sie beispielsweise bei einigen Metallen gegeben sind.

Als geeignetes Material für Dichtelemente bei ölhaltigen Medien und mäßigen Temperaturbelastungen haben sich Acrylnitril-Butadien-Kautschuke herausgestellt. Für Anwendungen, bei denen eine hohe Hitzebeständigkeit gefordert ist, haben sich als geeignete Materialen für die Dichtelemente Fluor-Elastomere herausgestellt, als Elastomere mit einer hohen chemischen Beständigkeit bei mittlerer Temperaturbeständigkeit (bis ca. 300 °C) sind Perfluor-Elastomere geeignet. Bei weiteren Ausgestaltungen der Erfindung hat es sich als vorteilhaft herausgestellt, wenn als Material für das erste Dichtelement und/oder das zweite Dichtelement Metalle oder Metall-Legierungen verwendet werden, wobei hier insbesondere Tantal interessant ist, da es hinreichend duktil, chemisch extrem widerstandsfähig und sehr temperaturbeständig ist. Für Anwendungen mit weniger extremen Anforderungen kann auch Silber bzw. können auch Silberlegierungen verwendet werden oder auch andere Edelmetalle.

Selbstverständlich ist die beschriebene Faserdurchführung nicht nur für Vortex-Durchflussmessgeräte geeignet, es ist ohne weiteres denkbar, die zuvor ausführlich beschriebene Faserdurchführung auch in anderen Geräten bzw. in Wandungen anderer Geräte einzusetzen.

Im Einzelnen gibt es nur eine Vielzahl von Möglichkeiten, das erfindungsgemäße Vortex-Durchflussmessgerät und die erfindungsgemäße Faserdurchführung auszugestalten und weiterzubilden. Dazu wird verwiesen einerseits auf die dem Patentanspruch 1 nachgeordneten Patentansprüche, andererseits auf die folgende Beschreibung eines Ausführungsbeispieles in Verbindung mit der Zeichnung. In der Zeichnung zeigen
- Fig. 1: eine erfindungsgemäße Faserdurchführung in der Gerätewandung eines Vortex-Durchflussmessgeräts in einem seitlichen Schnitt,
- Fig. 2: die Fasdurchführung gemäß Fig. 1 in Aufsicht mit einem Teilschnitt und
- Fig. 3: den Faserkanal einer erfindungsgemäßen Faserdurchfiihrung im nicht dichtenden Zustand (oben) und im Dichtzustand (unten).

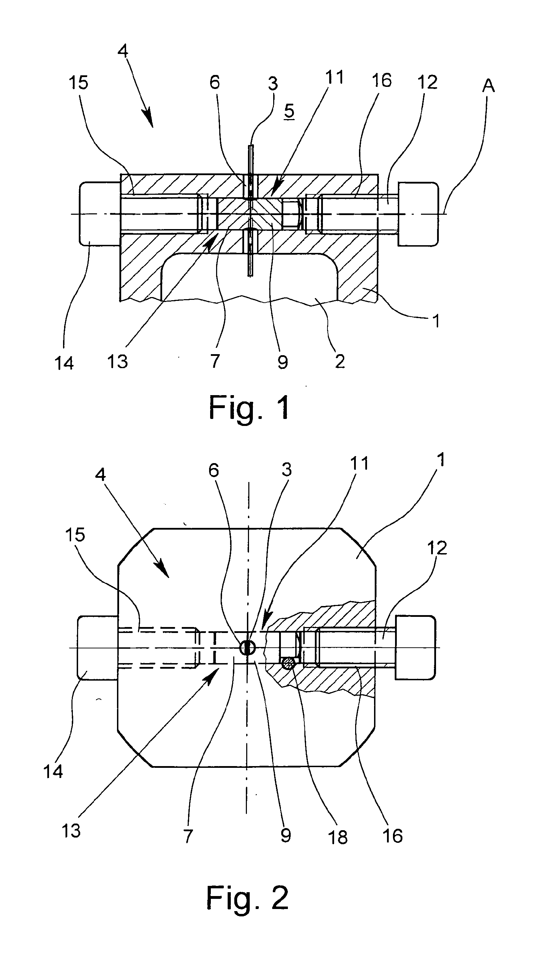

In den Figuren 1 bis 3 ist ausschnittsweise mit Konzentration auf das Wesentliche ein Vortex-Durchflussmessgerät mit einem von einem Medium zumindest teilweise durchströmbaren und durch eine Gerätewandung 1 definierten Mediumraum 2 dargestellt. Nicht zu sehen ist hier der in dem Mediumraum 2 üblicherweise vorgesehene Staukörper, genauso wenig wie der immer in Vortex-Durchflussmessgeräten vorgesehene Druckaufnehmer, dessen Auslenkung messtechnisch zur Detektion des Drucks in dem dem Druckaufnehmer benachbarten Medium herangezogen wird. Dargestellt ist jedoch die zur Erfassung der Auslenkung des Druckaufnehmers erforderliche optische Faser 3, die weiter unten in geeigneter Weise mit dem Druckaufnehmer verbunden ist, wobei in den Figuren zu erkennen ist, dass die optische Faser 3 vom Mediumraum 2 durch eine druckfeste Faserdurchführung 4 in der Gerätewandung 1 in einen mediumfreien Außenraum 5 geführt ist.

Die Faserdurchführung 4 weist einen Faserkanal 6 in der Gerätewandung 1 auf, ein in den Faserkanal 6 hineinragendes erstes Dichtelement 7 mit einer Anlagefläche 8 für die optische Faser 3 und wenigstens ein zweites Dichtelement 9 mit einer Anlagefläche 10. Das zweite Dichtelement 9 ist vorliegend in einer in der Gerätewandung 1 ausgebildeten Führung 11 geführt, wobei das zweite Dichtelement 9 im Dichtzustand der Faserdurchführung 4 durch ein Stellmittel 12 mit seiner Anlagefläche 10 so gegen die Anlagefläche 8 des ersten Dichtelements 7 gedrückt ist, dass die zwischen der Anlagefläche 8 des ersten Dichtelements 7 und der Anlagefläche 10 des zweiten Dichtelements 9 angeordnete optische Faser 3 von der Anlagefläche 8 des ersten Dichtelements 7 und von der Anlagefläche 10 des zweiten Dichtelements 9 umschmiegt ist. Auf diese Weise wird der Faserkanal 6 durch das erste Dichtelement 7, das zweite Dichtelement 8 und die zwischen dem ersten Dichtelement 7 und dem zweiten Dichtelement 8 geführte optische Faser 3 verschlossen.

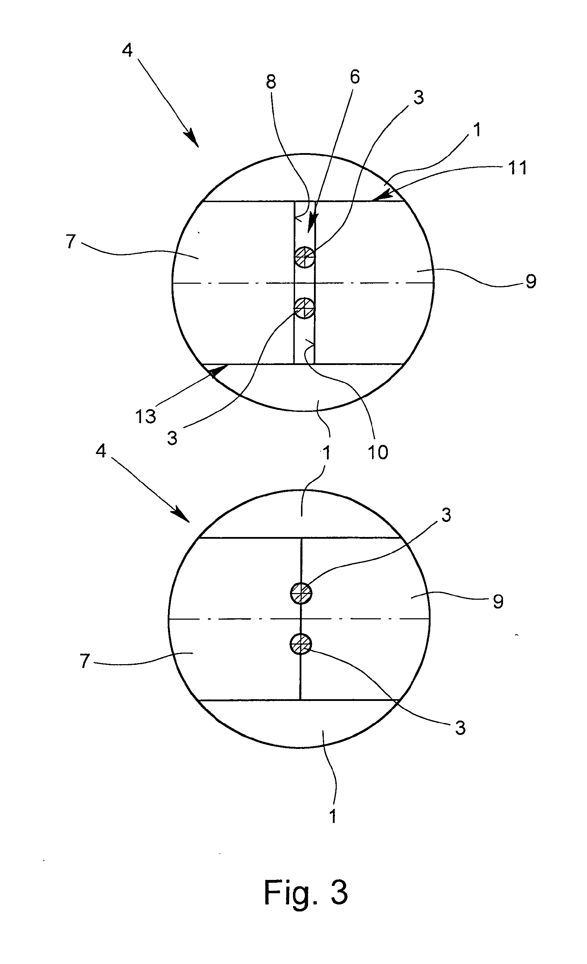

In Fig. 3 ist in dem oberen Teil der Abbildung gezeigt, wie die Faserdurchfiihrung 4 in nicht dichtendem Zustand aussieht, wobei hier das erste Dichtelement 7 und das zweite Dichtelement 9 mit ihren Anlageflächen 8, 10 die optische Faser 3 bzw. die optischen Fasern 3 berühren. Durch Beaufschlagung der Dichtelemente 7, 9 mit einer Kraft in Richtung auf die optischen Fasern 3 wird der verbleibende Spalt im Faserkanal 6 geschlossen, indem sich die Dichtelemente plastisch und/oder elastisch verformen und um die optischen Fasern 3 mit ihren Anlageflächen 8, 10 legen. Einer solchen mechanischen Belastung können die optischen Fasern 3 durchaus standhalten, ein hinreichend elastisch und/oder plastisches Material für die Dichtelemente 7 und 9 vorausgesetzt. Die Anlageflächen 8 und 10 der Dichtelemente 7 und 9 schmiegen sich nicht nur an die optischen Fasern 3 an, sondern berühren sich auch gegenseitig und dichten damit auch den Spalt zwischen ihnen ab. Bei einer weiteren Ausgestaltung der Erfindung, die hier nicht dargestellt ist, ist vorgesehen, dass die Kanten wenigstens einer der Anlageflächen zum Mediumraum und zum mediumfreien Raum leicht zurückliegen, um das Abklemme/Abscheren der optischen Faser zu verhindern; dann ist die Anlagefläche des betreffenden Dichtelements beispielsweise leicht konvex geformt.

Wie in den Fig. 1 und 2 zu erkennen ist, ist auch das erste Dichtelement 7 in einer in der Gerätewandung 1 ausgebildeten Führung 13 geführt und ist ebenfalls durch ein Stellmittel 14 positionierbar in der Führung 13. Das erste Dichtelement 7 und das zweite Dichtelement 9 sind in ihren jeweiligen Führungen 11, 14 so eng eingepasst dass im Dichtzustand der Faserdurchfiihrung 4 das erste Dichtelement 7 mit seiner Führung 13 dicht abschließt und das zweite Dichtelement 9 ebenfalls mit seiner Führung 11 dicht abschließt. Dieser Effekt wird nicht nur durch eine geeignete Passung der Dichtelemente 7, 9 in den Führungen 11, 13 erzielt, sondern insbesondere auch durch die in Richtung der Kraftbeaufschlagung durch das Stellelement 12 bewirkte Stauchung der Dichtelemente 7, 9 und die damit einhergehende radiale Ausdehnung der Dichtelemente 7, 9 gegen die Wandungen der Führungen 7, 11.

Im vorliegenden Fall ist die Führung 13 des ersten Dichtelements 7 und die Führung 11 des zweiten Dichtelements 9 senkrecht zur Faserdurchführung 4 und damit zum Faserkanal 6 ausgeführt, wobei die Führung 13 des ersten Dichtelements 7 und die Führung 11 des zweiten Dichtelements 9 auf einer gemeinsamen Achse A liegen, wobei die Führung 13 des ersten Dichtelements 7 und die Führung 11 des zweiten Dichtelements 9 vorliegend als Bohrungen ausgeführt sind.

Das Stellmittel 14 für das erste Dichtelement 7 und das Stellmittel 12 für das zweite Dichtelement 9 bestehen jeweils aus einer Gewindestange bzw. aus einer Maschinenschraube, die jeweils in einem in der Gerätewandung 1 vorgesehenen Gewindegang 15, 16 geführt ist. Jeder Gewindegang 15, 16 liegt ebenfalls auf der Achse A der Führung 11, 13 des jeweils zugeordneten Dichtelements 7, 9. Im vorliegenden Fall ergeben sich die Führungen 11, 13 und die Bohrungen für die Gewindegänge 15, 16 durch eine einzige Durchgangsbohrung.

Zwischen dem Stellmittel 12 für das zweite Dichtelement 9 und dem zweiten Dichtelement 9 ist ein Druckstück 17 angeordnet, das mit einem Stift 18 gegen Verdrehen gesichert ist, so dass praktisch kein Drehmoment auf das zweite Dichtelement 9 durch das Stellmittel 12 übertragen werden kann. Das Druckstück 17 gestattet so eine Linearbewegung in Richtung der Führung 11 des zweiten Dichtelements 9, es blockiert aber eine Drehbewegung um die Achse A der Linearbewegung. Das ist wichtig, weil ein Mitdrehen des zweiten Dichtelements 9 zur Zerstörung der optischen Faser 3 beim Anpressen des zweiten Dichtelements 9 an das erste Dichtelement 7 führen würde. Selbstverständlich kann auch zusätzlich oder alternativ zwischen dem Stellmittel 14 für das erste Dichtelement 7 und dem ersten Dichtelement 7 auch ein Druckstück vorgesehen werden, in diesem Fall wäre es egal, mit welchem Stellmittel 12, 14 zunächst die Position der optischen Faser 3 in dem Faserkanal 6 eingestellt würde und mit welchem Stellmittel 12, 14 nachfolgend die Druckbeaufschlagung auf die Dichtelemente 7, 9 erfolgte.

In dem dargestellten Ausführungsbeispiel bestehen das erste Dichtelement 7 und das zweite Dichtelement 9 aus Tantal, so dass die realisierte Faserdurchfiihrung 4 insgesamt eine hohe Druck- und Hitzebeständigkeit sowie Beständigkeit gegen chemische Korrosion aufweist.

## Patentansprüche

1. Vortex-Durchflussmessgerät mit einem von einem Medium zumindest teilweise durchströmbaren und durch eine Gerätewandung (1) definierten Mediumraum (2), wenigstens einem in dem Mediumraum (2) vorgesehenen Staukörper und wenigstens einem mit dem im Wirkbereich des Staukörpers vorgesehenen Druckaufnehmer, wobei die Auslenkung des Druckaufnehmers messtechnisch zur Detektion des Drucks in dem dem Druckaufnehmer benachbarten Medium herangezogen wird, wobei zur Erfassung der Auslenkung des Druckaufnehmers wenigstens eine optische Faser (3) auf und/oder in dem Druckaufnehmer angeordnet ist, und wobei die optische Faser (3) vom Mediumraum durch eine druckfeste Faserdurchfiihrung (4) in der Gerätewandung (1) in einen mediumfreien Außenraum (5) geführt ist,
**dadurch gekennzeichnet,**
**dass** die Faserdurchfiihrung (4) einen Faserkanal (6) in der Gerätewandung (1), ein in den Faserkanal (6) hineinragendes erstes Dichtelement (7) mit einer Anlagefläche (8) für die optische Faser (3) und wenigstens ein zweites Dichtelement (9) mit einer Anlagefläche (10) für die optische Faser umfasst, wobei das zweite Dichtelement (9) in einer in der Gerätewandung (1) ausgebildeten Führung (11) geführt ist und im Dichtzustand der Faserdurchfiihrung (4) das zweite Dichtelement (9) durch ein Stellmittel (12) so mit seiner Anlagefläche (10) gegen die Anlagefläche (8) des ersten Dichtelements (7) gedrückt ist, dass die zwischen der Anlagefläche (8) des ersten Dichtelements (7) und der Anlagefläche (10) des zweiten Dichtelements (9) angeordnete optische Faser (3) von der Anlagefläche (8) des ersten Dichtelements (7) und/oder von der Anlagefläche (10) des zweiten Dichtelements (9) umschmiegt ist und so der Faserkanal (6) durch das erste Dichtelement (7), das zweite Dichtelement (9) und die zwischen dem ersten Dichtelement (7) und dem zweiten Dichtelement (8) geführte optische Faser (3) verschlossen ist.

2. Vortex-Durchflussmessgerät nach Anspruch 1, **dadurch gekennzeichnet, dass** das erste Dichtelement (7) in einer in der Gerätewandung (1) ausgebildeten Führung (13) geführt ist und durch ein Stellmittel (14) positionierbar ist.

3. Vortex-Durchflussmessgerät nach Anspruch 1 oder 2, **dadurch gekennzeichnet, dass** im Dichtzustand der Faserdurchführung (4) das erste Dichtelement (7) mit seiner Führung (13) dicht abschließt und/oder das zweite Dichtelement (9) mit seiner Führung (11) dicht abschließt.

4. Vortex-Durchflussmessgerät nach einem der Ansprüche 1 bis 3, **dadurch gekennzeichnet, dass** die Führung (13) des ersten Dichtelements (7) und/oder die Führung (11) des zweiten Dichtelements (9) senkrecht zum Faserkanal (6) ausgeführt sind, insbesondere die Führung (13) des ersten Dichtelements (7) und die Führung (11) des zweiten Dichtelements (9) auf einer Achse A liegen, bevorzugt die Führung (13) des ersten Dichtelements (7) und/oder die Führung (11) des zweiten Dichtelements (9) als Bohrungen ausgeführt sind.

5. Vortex-Durchflussmessgerät nach einem der Ansprüche 1 bis 4, **dadurch gekennzeichnet, dass** das Stellmittel (14) für das erste Dichtelement (7) und/oder das Stellmittel (12) für das zweite Dichtelement (9) jeweils als eine Gewindestange in jeweils einem in der Gerätewandung (1) Gehäuse vorgesehenen Gewindegang (15, 16) realisiert ist, insbesondere wobei der Gewindegang (15, 16) jeweils auf der Achse A der Führung (11, 13) des zugeordneten Dichtelements (7, 9) liegt.

6. Vortex-Durchflussmessgerät nach einem der Ansprüche 1 bis 5, **dadurch gekennzeichnet, dass** zwischen dem Stellmittel (14) für das erste Dichtelement (7) und dem ersten Dichtelement (7) und/oder zwischen dem Stellmittel (12) für das zweite Dichtelement (9) und dem zweiten Dichtelement (9) jeweils ein Druckstück (17) angeordnet ist.

7. Vortex-Durchflussmessgerät nach einem der Ansprüche 1 bis 6, **dadurch gekennzeichnet, dass** das erste Dichtelement (7) und/oder das zweite Dichtelement (9) aus einem Elastomer besteht, insbesondere aus einem Acrylnitril-Butadien-Kautschuk, aus einem Fluor-Elastomer oder aus einem Perfluor-Elastomer.

8. Vortex-Durchflussmessgerät nach einem der Patentansprüche 1 bis 7, **dadurch gekennzeichnet, dass** das erste Dichtelement (7) und/oder das zweite Dichtelement (9) aus einem Metall oder einer Legierung besteht, insbesondere mit wenigstens Bestandteilen aus Tantal und/oder Silber.

9. Faserdurchfiihrung (4) zur Durchführung einer optische Faser (3) durch eine Gerätewandung (1),
**gekennzeichnet durch**,
die Merkmale des Kennzeichnungsteils wenigstens eines Anspruchs der Ansprüche 1 bis 8.
